# EUROPEAN PATENT SPECIFICATION

(11) **EP 3 061 861 B1**
(45) Date of publication and mention of the grant of the patent: **19.06.2019**
(21) Application number: 13896015.8
(22) Date of filing: 18.12.2013
(51) Int. Cl.: D06F 37/40, D06F 35/00

(54) **WASHING METHOD OF WASHING MACHINE AND WASHING MACHINE**
WASCHVERFAHREN EINER WASCHMASCHINE SOWIE WASCHMASCHINE
PROCÉDÉ DE LAVAGE D'UNE MACHINE À LAVER, ET MACHINE À LAVER

(30) Priority: 23.10.2013 CN 201310501494; 23.10.2013 CN 201310502654
(43) Date of publication of application: 31.08.2016
(73) Proprietor: Haier Group Corporation, Qingdao, Shandong 266101 (CN); Qingdao Haier Washing Machine Co., Ltd., Qingdao, Shandong 266101 (CN)
(72) Inventor: LV, Peishi, Qingdao Shandong 266101 (CN); GAO, Qiuying, Qingdao Shandong 266101 (CN); XU, Jie, Qingdao Shandong 266101 (CN); FANG, Dafeng, Qingdao Shandong 266101 (CN); ZHANG, Haojun, Qingdao Shandong 266101 (CN)
(74) Representative: Ziebig, Marlene
(86) International application number: PCT/CN2013/089800
(87) International publication number: WO 2015/058447

(56) References cited:
- EP-A2- 1 630 278
- CN-A- 1 165 883
- CN-A- 1 381 637
- CN-A- 1 572 952
- JP-A- H11 300 086
- JP-A- 2001 029 684
- JP-U- H0 199 384
- US-A- 5 000 016
- US-A1- 2011 179 584

## Description

### FIELD OF THE INVENTION

The present invention relates to the field of washing machines, and in particular, to a washing method of a washing machine, in which rotation manners of an impeller and an inner drum are separately controlled, and a washing machine thereof.

### BACKGROUND OF THE INVENTION

A structure of a conventional washing machine is constituted by an inner drum, an outer drum, a stirrer, a transmission system, a control system, a housing, and the like. During washing, the inner drum does not rotate, and the stirrer rotates in forward and reverse directions to actuate water and laundry in the drum to rotate to implement washing. This washing method is tested by practices and is found to have some disadvantages: 1. There is a single washing manner, and it is difficult to improve a rate of washing ability. 2. Strength of a water flow is weak, and clothes are easily twisted. In order to overcome the foregoing disadvantages, some washing machine manufacturing enterprises design a "rotary drum" washing machine, and a method thereof is that: during washing, an inner drum is in a free state, when a stirrer rotates, and the inner drum rotates by means of a reaction force generated from rotation of the stirrer, so as to enable the inner drum and the stirrer to rotate opposite to each other, thereby achieving a purpose of "scrubbing clothes".

However, a disadvantage still exists in this method because the inner drum has no power, rotation strength of the inner drum is low, the stirrer only rotates forward and backward on a bottom of the drum, an effect of "scrubbing clothes" is little, a washing effect is not improved obviously, and the problem of twisting clothes still cannot be resolved in a favorable manner. How to overcome the foregoing disadvantages as soon as possible is a problem that needs to be resolved urgently.

A Chinese patent having an application number of 01127557.X discloses a bidirectional washing method by using a washing machine and a washing machine thereof, where the washing machine includes an inner drum, a stirrer, a motor, and a power transmission mechanism, and is further provided with a power transmission mechanism having a rotation direction opposite to that of the stirrer, and the power transmission mechanism is connected to the inner drum. During washing, both the inner drum and stirrer perform washing in an opposite direction under actuation of power. Because the inner drum is provided with a power transmission mechanism, during washing, both of the inner drum and stirrer are driven by power, in a manner of one-way in two-way out, the drive inner drum and stirrer are separately driven to rotate opposite to each other. However, because a power transmission mechanism is used for transmission in this driving manner, its reversing manner and rotation speed are both fixed, the inner drum or stirrer cannot be freely independently driven to reverse, and the inner drum and stirrer must rotate opposite to each other.

Because with regard to rotation of an impeller and an inner drum of a conventional impeller washing machine, a motor transmits power to a deceleration clutch by actuating a belt by a belt pulley, the deceleration clutch converts a high rotation speed of the motor into lower rotation speeds required in different washing processes of the washing machine by using an internal gear structure thereof, and meanwhile, according to different washing manners, the deceleration clutch uses different gear structures to transfer different rotation directions and rotation manners to the impeller.

In such a structure, because the deceleration clutch and motor are horizontally arranged at the bottom of the outer drum, the structure of the whole system is relative large. In another aspect, the deceleration clutch is located at a central portion of the outer drum, the motor deviates from a position of the central portion, and a center of the whole structure of the bottom of the outer drum deviates from a central hole of the outer drum. In a working process of the washing machine, while the motor actuates the deceleration clutch to work, torque is generated relative to the center of the outer drum during a rotation process of the motor, instability of the whole system is increased, and during the washing process, the washing machine generates relatively high noise and large vibration.

In order to alleviate a phenomenon that the washing machine generates noise and vibration during a working process, many existing washing machines use direct drive motors, where belt pulley and belt apparatuses are removed, and the deceleration clutch is directly longitudinally mounted on and connected to the motor, and in this way, a center of gravity of the structure of the bottom of the outer drum is basically at a position of the central hole of rotation of the outer drum. Such a structure improves transmission efficiency and stability of the motor and meanwhile, reduces noise in a running process.

However, in an existing structure where the direct drive motor is used, because a deceleration clutch is still used, during a washing process, a rotation manner of a conventional dual-power washing machine or a fully-automatic washing machine is still used as a rotation manner of the inner drum and the impeller, and this washing machine do not improve the washing water flow and the rate of washing ability.

EP-A-1 630 278 discloses a washing machine comprising a washing shaft that extends through an outer tub, and is coupled to an inner tub; and a double rotor motor coupled to the wash-ing shaft, the double rotor motor having two rotors drivable independently from each other and wound independently from each other.

In view of the above, the present invention is proposed herein. JP411300086A discloses a fully automatic washing machine comprising rotary blade and washing/dehydrating drum, while the washing/dehydrating drum is rotating, the rotary blade is rotated in the direction opposite to the direction of rotation of the washing/ dehydrating drum to allow to perform washing with a small torque of a motor thereby achieving a low cost.

### SUMMARY OF THE INVENTION

The technical problem that the present invention attempts to resolve is overcoming disadvantages of the prior art and providing a washing method according to independent claim 1 and independent claim 9 for freely controlling relative rotation directions of an inner drum and an impeller during a washing process. Further improvements and embodiments are provided in the dependent claims.

Another purpose of the present invention is to provide a washing method for cyclically reversing an inner drum and an impeller that rotate opposite to each other and rotate in a same direction during a washing process.

Still another purpose of the present invention is to provide a washing method where an inner drum and an impeller have different actions during a washing process.

Further another purpose of the present invention is to provide a washing machine that separately drives an inner drum and an impeller to rotate by using a dual-rotor motor and controlling relative actions and rotation directions of the two.

In order to resolve the foregoing technical problems, a basic concept of a technical solution used by the present invention is: a washing method of a washing machine, where the washing machine includes an outer drum, an inner drum, an impeller, and a driving apparatus, in a washing process, a driving apparatus drives the inner drum and the impeller to rotate opposite to each other, and after each rotation cycle, the inner drum and the impeller reversely rotate, where: the driving apparatus drives the inner drum and the impeller to reverse asynchronously, so as to enable the impeller and the inner drum to rotate in a same direction within a reversal time difference.

Further, the impeller and the inner drum reverse asynchronously, and a time difference of a reversal is greater than 0 and less than 5S.

Further, the driving apparatus drives the inner drum or the impeller to delay or advance a reversal, and a set time for delaying or advancing the reversal is greater than 0 and less than 5S.

Further, within each rotation cycle, a time of a reversal of the inner drum or impeller is earlier or later than a time of a reversal of the impeller or inner drum by 0.05 to 3S.

Further, when washing starts, the impeller and the inner drum rotate opposite to each other, and a delayed starting time between the two is greater than 0 and less than or equal to 3S.

Further, the impeller or inner drum first rotates, after a delay of a set time, the inner drum or impeller further rotates in an opposite direction, each rotation cycle time of the inner drum is equal to that of the impeller, and the set time of the delay is less than the rotation cycle time.

The present invention provides a washing method of a washing machine, where the washing machine includes an outer drum, an inner drum, an impeller, and a driving apparatus, in a washing process, a driving apparatus drives the inner drum and the impeller to rotate opposite to each other, and after each rotation cycle, the inner drum and the impeller reversely rotate, where: the driving apparatus drives the inner drum and the impeller to reverse asynchronously, so as to enable one of the impeller and the inner drum to rotate and the other to stay stationary within a reversal time difference.

Further, when each rotation cycle ends, the driving apparatus drives the inner drum to stop rotating, the impeller to reversely rotate, and the inner drum to further reversely rotate after a set time, and the set time is greater than 0 and less than 5S.

Alternatively, in another implementation manner, when each rotation cycle is about to end, the driving apparatus drives the inner drum to stop rotating, the impeller to continue rotating, and the inner drum and the impeller to further reversely rotate after a set time, and the set time is greater than 0 and less than 5S.

In the washing method of a washing machine according to the present invention, in a washing process, a rotation speed ratio between the inner drum and the impeller is 1 :(1 to 5); and a rotation speed of the impeller is 40 to 150 revolutions per minute.

Further, a time when the driving apparatus drives the inner drum and the impeller to rotate opposite to each other within each rotation cycle is 1 to 5S.

Further in the washing method of a washing machine according to the present invention, a rotation speed of the inner drum and/or impeller in each washing process is changeable, and the rotation speed is increased or reduced corresponding to a set changing rule.

Further, speeds of the inner drum and the impeller that rotate in a same direction are different from speeds of the inner drum and the impeller that rotate opposite to each other; a rotation speed of the impeller when the inner drum is stationary is different from a rotation speed of the impeller when the inner drum and impeller rotate opposite to each other.

Preferably, speeds of the inner drum and the impeller that rotate in a same direction are less than speeds of the inner drum and the impeller that rotate opposite to each other; a rotation speed of the impeller when the inner drum is stationary is less than a rotation speed of the impeller when the inner drum and impeller rotate opposite to each other.

Further, when the inner drum and the impeller rotate opposite to each other in each rotation cycle, a change of the rotation speed(s) of the inner drum and/or impeller may also be independently controlled.

After using the foregoing technical solutions, the present invention, as compared with the prior art, has the following beneficial effects.

In the washing method of a washing machine according to the present invention, an inner drum and an impeller rotate opposite to each other, after each rotation cycle, the inner drum and the impeller reversely rotate and still rotate opposite to each other, and within two rotation cycles, a motion manner of the inner drum or impeller is changed, so that the inner drum and the impeller rotate in a same direction or one of the inner drum and the impeller rotation rotates, and the other is stationary. This washing method changes a washing water flow, alleviates clothes twisting resulted from simultaneous reversal of the inner drum and impeller, and reduces wearing of the clothes.

In the washing machine according to the present invention, two rotors are respectively connected to an inner drum axis and an impeller axis to respectively drive the inner drum and impeller to rotate, and such a structure reduces, to a greater extent, a weight, a column, and costs of a driving system, thereby improving transmission efficiency and stability. Because a deceleration clutch apparatus is omitted, control of the present invention is more convenient.

During a washing process of the washing machine of the present invention, the impeller and inner drum are separately driven to rotate by means of correspondingly connected rotors, during washing, when the impeller and inner drum rotate either in a same direction or opposite to each other, a rotation direction is directly controlled by using a rotor, and during dewatering, the impeller and inner drum are controlled to rotate in a same direction and at a same speed. In this process, power transmission directly driven by two rotors is used, a conventional implementation manner of transferring torque by merely depending on gear reduction is broken through, and because there is no force division and deceleration structure therebetween, loss caused by intermediate energy transfer is reduced, and meanwhile, noise is reduced.

### BRIEF DESCRIPTION OF THE DRAWINGS

FIG. 1 is a schematic diagram of dual-rotor motor driving of a washing machine according to the present invention; and
FIG. 2 is another schematic diagram of dual-rotor motor driving of a washing machine according to the present invention.

### DETAILED DESCRIPTION OF THE INVENTION

Specific implementation manners of the present invention are further described in detail below with reference to the accompanying drawings.

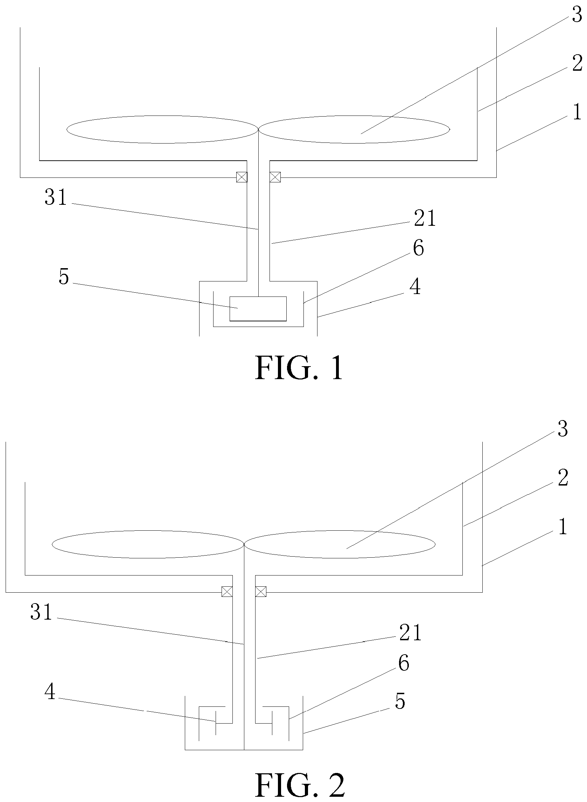

As shown in FIG. 1 and FIG. 2, the impeller washing machine according to the present invention includes an outer drum 1, an inner drum 2, an impeller 3, and a driving apparatus; the driving apparatus is a dual-rotor motor that separately controls actions of the inner drum and the impeller, and the dual-rotor motor directly drives impeller and the inner drum to act; the dual-rotor motor includes two rotors and one stator, which are respectively, a first rotor 4, a second rotor 5, and a stator 6; the first rotor 4 is connected to an inner drum axis 21, the second rotor 5 is connected to an impeller axis 31, the inner drum axis 21 is hollow, the impeller axis 31 is coaxially disposed inside the inner drum axis 21, and the first rotor 4, second rotor 5, and stator 6, as well as the impeller axis 31 are disposed coaxially. In the dual-rotor motor in FIG. 1, the first rotor 4 is an outer rotor, the second rotor 5 is an inner rotor; and in the dual-rotor motor in FIG. 2, the first rotor 4 is an inner rotor, and the second rotor 5 is an outer rotor. In addition to the dual-rotor motor, the driving apparatus of the washing machine may be two motors that are respectively connected to the inner drum axis and impeller axis, so as to drive them separately, or another driving apparatus having two independent power inputs.

In the washing method of a washing machine according to the present invention, an inner drum and an impeller rotate opposite to each other, after each rotation cycle, the inner drum and the impeller reversely rotate and still rotate opposite to each other, and within two rotation cycles/before each rotation cycle ends, a motion manner of the inner drum or impeller is changed, so that the inner drum and the impeller rotate in a same direction or one of the inner drum and the impeller rotation rotates, and the other is stationary. This rotation cycle is a cycle time when the inner drum and the impeller rotate opposite to each other, that is, after the impeller rotates forward and the inner drum rotates backward for a cycle, in a next cycle, the impeller rotates backward and the inner drum rotates forward. The present invention makes further improvement on the basis of an existing washing method of a dual-power washing machine, and implements cyclic rotation in a manner that the inner drum and impeller rotate opposite to each other, rotate in a same direction, or rotate opposite to each other and then rotate in a same direction, and during dewatering, the impeller and the inner drum are driven to rotate in a same direction and at a same speed.

### Embodiment 1

In this embodiment, in the washing machine, after each rotation cycle ends, the driving apparatus drives the inner drum to reverse and the impeller to continue rotating to delay the reversal, a set time of the delayed reversal is 0.05 to 3S, that is, after each cycle that the inner drum and the impeller rotate opposite to each other ends, the inner drum first reversely rotates, and the impeller continues rotating in an original rotation direction (at this time, the impeller and the inner drum rotate in a same direction), after the inner drum reversely rotates by 0.05 to 3S, the impeller further reversely rotates (at this time, the impeller and the inner drum rotate opposite to each other), and a next cycle that they rotate opposite to each other is entered; during a reversal stage of 0.05 to 3S, the inner drum and the impeller rotate in a same direction.

### Example 2

In this embodiment, in the washing machine, after each rotation cycle ends, the driving apparatus drives the impeller to reverse and the inner drum to continue rotating to delay the reversal, a set time of the delayed reversal is 0.1 to 2.5S, that is, after each cycle that the inner drum and the impeller rotate opposite to each other ends, the impeller first reversely rotates, and the inner drum continues rotating in an original rotation direction (at this time, the impeller and the inner drum rotate in a same direction), after the impeller reversely rotates by 0.1 to 2.5S, the inner drum further reversely rotates (at this time, the impeller and the inner drum rotate opposite to each other), and a next cycle that they rotate opposite to each other is entered; during a reversal stage of 0.1 to 2.5S, the inner drum and the impeller rotate in a same direction.

### Embodiment 3

The washing machine of this embodiment differs from the foregoing embodiments in that: when each rotation cycle is about to ends, the driving apparatus drives the inner drum to reverse in advance and the impeller to continue rotating and further reverse until the cycle ends, a set time of the advanced reversal is 1 to 2S, that is, 1 to 2S before each rotation cycle ends, the inner drum first reversely rotates, and the impeller continues rotating in an original rotation direction (at this time, the impeller and the inner drum rotate in a same direction), after the inner drum reversely rotates by 1 to 2S, at this time, the rotation cycle ends, and the impeller further reversely rotates (at this time, the impeller and the inner drum rotate opposite to each other), and a next cycle that they rotate opposite to each other is entered; during a reversal stage of 1 to 2S, the inner drum and the impeller rotate in a same direction.

### Embodiment 4

In the washing machine of this embodiment, when washing starts, a driving apparatus drives the impeller/inner drum to first rotate forward, clockwise, at this time, the inner drum/impeller is stationary, after the impeller/inner drum rotates clockwise by a set time t, the inner drum/impeller further rotates backward, counterclockwise, at this time, the impeller/inner drum still rotates forward, clockwise, and the impeller and inner drum rotate opposite to each other; after the impeller/inner drum rotates clockwise by a time T (t<T), the impeller/inner drum reverses to rotate counterclockwise, after rotating counterclockwise by the time T, the inner drum/impeller also reversely rotates, and after reversely rotating by the time T, the impeller and inner drum further reversely rotate; in this way, actions are performed according to this rule until the washing ends; a period of time after each time the impeller/inner drum reversely rotates and before the inner drum/impeller reversely rotates is t, and within this period of time, the impeller and inner drum rotate in a same direction.

### Embodiment 5

The driving apparatus of the washing machine of this embodiment controls the impeller and the inner drum to rotate opposite to each other by 2 to 4S, stops, controls the impeller and the inner drum to rotate in a same direction by 2 to 4S, stops, and then controls the impeller and the inner drum to rotate opposite to each other by 2 to 4S, and the foregoing process is repeated.

### Embodiment 6

In a washing process of the washing machine of this embodiment, a cycle time that the impeller and the inner drum rotate in a same direction is less than a cycle time that the impeller and the inner drum rotate opposite to each other, which is specifically that the driving apparatus controls the impeller and the inner drum to rotate opposite to each other by 2 to 4S, stops, controls the impeller and the inner drum to rotate in a same direction by 1 to 2S, stops, and then controls the impeller and the inner drum to rotate opposite to each other by 2 to 4S, and the foregoing process is repeated.

### Embodiment 7

In the washing machine of this embodiment, when washing starts, a driving apparatus drives the impeller to first rotate forward, clockwise, at this time, the inner drum is stationary, after the impeller rotates clockwise by 1 to 2S, the inner drum further rotates backward, counterclockwise, at this time, the impeller still rotates forward, clockwise, and the impeller and inner drum rotate opposite to each other; after the impeller rotates clockwise by 3 to 5S, the impeller reverses to rotate counterclockwise, after rotating counterclockwise by 3 to 5S, the inner drum/impeller also reversely rotates, and after reversely rotating by 3 to 5S, the impeller and inner drum further reversely rotate; a cycle of reverse rotation of the impeller is the same as that of the inner drum; with a period of time after each time the impeller reversely rotates and before the inner drum reversely rotates, the impeller and inner drum rotate in a same direction.

### Embodiment 8

This embodiment is a washing process of the washing machine, where the driving apparatus drives the inner drum and the impeller to rotate opposite to each other, and after each rotation cycle, the inner drum and the impeller reversely rotate, where: the driving apparatus drives the inner drum and the impeller to reverse asynchronously, so as to enable one of the impeller and the inner drum to rotate and the other to stay stationary within a reversal time difference. That is, a cyclic motion manner in which the impeller and inner drum rotate opposite to each other, only the impeller or inner drum rotates, and impeller and inner drum further rotate opposite to each other is implemented.

### Embodiment 9

On the basis of Embodiment 8, in this embodiment, when each rotation cycle ends, the driving apparatus drives the inner drum to first stop rotating, the impeller to reversely rotate, and the inner drum to further reversely rotate after a set time, and the set time is 1 to 4S.

Alternatively, in another implementation manner, 3 to 4S before each rotation cycle of the inner drum ends, the driving apparatus drives the inner drum to stop rotating, the impeller to continue rotating, and the inner drum and the impeller to further reversely rotate after 3 to 4S.

### Embodiment 10

This embodiment is a washing process of the washing machine, after the driving apparatus drives the inner drum and impeller to rotate in a same direction or opposite to each other by a set time T1, the inner drum stops and the impeller continues rotating by a set time t1, the impeller and inner drum are controlled to rotate opposite to each other or in a same direction by a set time T2, further the inner drum stops and the impeller continues rotating by the set time t1, and the impeller and inner drum are further controlled to rotate in a same direction or opposite to each other by the set time T2, and the foregoing process is repeated; the set time T1 may be equal to the set time T2 or may be different from the set time T2, the set time tl is less than or equal to the set times T1 and T2, and the set times t1, T1, and T2 are greater than 0 and less than or equal to 5S.

### Embodiment 11

On the basis of Embodiment 10, in this embodiment, speeds of the inner drum and the impeller in each cycle that the inner drum and the impeller rotate in a same direction are less than speeds of the inner drum and the impeller in each cycle that the inner drum and the impeller rotate opposite to each other.

### Example 12

On the basis of the foregoing embodiments, in this embodiment, the driving apparatus drives the inner drum and the impeller to increase or reduce rotation speeds corresponding to a set changing rule within each rotation cycle. A rotation speed ratio between the inner drum and the impeller is 1:(1 to 5); and a rotation speed of the impeller is 40 to 150 revolutions per minute.

### Embodiment 13

The washing machine according to the present invention sets different driving manners of the foregoing embodiments according to different washing programs. For example, in a bulky laundry program, washing is merely performed in manner that the inner drum and the impeller rotate opposite to each other. Moreover, in a mild washing program, washing is performed in a cyclic rotation manner that the inner drum and the impeller rotate opposite to each other, rotate in a same direction, and then rotate opposite to each other. In a sweater washing program, washing is performed in a cyclic rotation manner that the inner drum and the impeller rotate opposite to each other, the inner drum stays stationary and the impeller rotates, and further the inner drum and the impeller rotate opposite to each other.

While there has been shown several and alternate embodiments of the present invention, it is to be understood that certain changes can be made as would be known to one skilled in the art without departing from the underlying scope of the present invention as is discussed and set forth above and below including claims. Furthermore, the embodiments described above and claims set forth below are only intended to illustrate the principles of the present invention and are not intended to limit the scope of the present invention to the disclosed elements.

## Claims

1. A washing method of a washing machine, wherein the washing machine comprises an outer drum (1), an inner drum (2), an impeller (3), and a driving apparatus, in a washing process, a driving apparatus drives the inner drum (2) and the impeller (3) to rotate opposite to each other, and after each rotation cycle, the inner drum (2) and the impeller (3) reversely rotate, wherein a rotation cycle is a cycle time when the inner drum (2) and the impeller (3) rotate opposite to each other,
**characterized in that** the driving apparatus drives the inner drum (2) and the impeller (3) to reverse asynchronously, so as to enable the impeller (3) and the inner drum (2) to rotate in a same direction within a reversal time difference; and **characterized in that**:
when washing starts, the impeller (3) and the inner drum (2) rotate in opposite to each other, and a delayed starting time between the impeller (3) and the inner drum (2) is greater than 0 and less than or equal to 3S;
wherein one of the impeller (3) and inner drum (2) first rotates, after a delay of a set time, the other one of the inner drum (2) and impeller (3) further rotates in an opposite direction, each rotation cycle time of the inner drum (2) is equal to that of the impeller (3), and the set time of the delay is less than the rotation cycle time.

2. The washing method of a washing machine according to claim 1, wherein the impeller (3) and the inner drum (2) reverse asynchronously, and a time difference of a reversal is greater than 0 and less than 5S.

3. The washing method of a washing machine according to claim 1, wherein the driving apparatus drives the inner drum (2) or the impeller (3) to delay or advance a reversal, and a set time for delaying or advancing the reversal is greater than 0 and less than 5S.

4. The washing method of a washing machine according to claim 2 or 3, wherein within each rotation cycle, a time of a reversal of the inner drum (2) or impeller (3), as compared with a time of a reversal of the impeller (3) or inner drum (2), is delayed or advanced by 0.05 to 3S.

5. The washing method of a washing machine according to claim 1, wherein in a washing process, a revolution speed ratio between the inner drum (2) and the impeller (3) is 1:(1 to 5); and a revolution speed of the impeller (3) is 40 to 150 revolutions per minute.

6. The washing method of a washing machine according to claim 1, wherein a time when the driving apparatus drives the inner drum (2) and the impeller (3) to rotate in opposite to each other within each rotation cycle is 1 to 5S.

7. The washing method of a washing machine according to claim 1 or 6 wherein speeds of the inner drum (2) and the impeller (3) that rotate in a same direction are different from speeds of the inner drum (2) and the impeller (3) that rotate opposite to each other.

8. The washing method of a washing machine according to claim 1, wherein a speed of rotation of the inner drum (2) and/or impeller (3) in each washing process is changeable, and a rotation speed is increased or reduced corresponding to a set changing rule.

9. A washing method of a washing machine, wherein the washing machine comprises an outer drum (1), an inner drum (2), an impeller (3), and a driving apparatus, in a washing process, a driving apparatus drives the inner drum (2) and the impeller (3) to rotate opposite to each other, and after each rotation cycle, the inner drum (2) and the impeller (3) reversely rotate, wherein this rotation cycle is a cycle time when the inner drum (2) and the impeller (3) rotate opposite to each other,
**characterized in that** the driving apparatus drives the inner drum (2) and the impeller (3) to reverse asynchronously, so as to enable one of the impeller (3) and the inner drum (2) to rotate and the other to stay stationary within a reversal time difference; and **characterized in that**:
when washing starts, the impeller (3) and the inner drum (2) rotate in opposite to each other, and a delayed starting time between the impeller (3) and the inner drum (2) is greater than 0 and less than or equal to 3S;
wherein one of the impeller (3) and inner drum (2) first rotates, after a delay of a set time, the other one of the inner drum (2) and impeller (3) further rotates in an opposite direction, each rotation cycle time of the inner drum (2) is equal to that of the impeller (3), and the set time of the delay is less than the rotation cycle time.

10. The washing method of a washing machine according to claim 9, wherein when each rotation cycle ends, the driving apparatus drives the inner drum (2) to stop rotating, the impeller (3) to reversely rotate, and the inner drum (2) to further reversely rotate after a set time, and the set time is greater than 0 and less than 5S.

11. The washing method of a washing machine according to claim 9, wherein when each rotation cycle is about to end, the driving apparatus drives the inner drum (2) to stop rotating, the impeller (3) to continue rotating, and the inner drum (2) and the impeller (3) to further reversely rotate after a set time, and the set time is greater than 0 and less than 5S.

12. The washing method of a washing machine according to claim 9, wherein a speed of rotation of the impeller (3) when the inner drum is stationary is different from a speed of rotation of the impeller (3) when the inner drum (2) and impeller (3) rotate in different directions.

## Patentansprüche

1. Waschverfahren einer Waschmaschine, wobei die Waschmaschine eine äußere Trommel (1), eine innere Trommel (2), ein Laufrad (3) und eine Antriebsvorrichtung umfasst, bei einem Waschvorgang eine Antriebsvorrichtung die innere Trommel (2) und das Laufrad (3) dazu antreibt, sich einander entgegengesetzt zu drehen, und die innere Trommel (2) und das Laufrad (3) sich nach jedem Rotationszyklus umgekehrt drehen, wobei ein Rotationszyklus eine Zykluszeit ist, in der die innere Trommel (2) und das Laufrad (3) sich einander entgegengesetzt drehen,
**dadurch gekennzeichnet, dass**
die Antriebsvorrichtung die innere Trommel (2) und das Laufrad (3) dazu antreibt, sich asynchron umzukehren, um zu ermöglichen, dass innerhalb einer Umkehrzeitdifferenz das Laufrad (3) und die innere Trommel (2) sich in eine gleiche Richtung drehen; und **dadurch gekennzeichnet, dass**:
wenn das Waschen anfängt, das Laufrad (3) und die innere Trommel (2) sich einander entgegengesetzt drehen und eine verzögerte Anfangszeit zwischen dem Laufrad (3) und der inneren Trommel (2) größer als 0 und kleiner oder gleich 3s ist;
wobei eines aus dem Laufrad (3) und der inneren Trommel (2) sich zuerst dreht, nach einer Verzögerung einer eingestellten Zeit das andere aus der inneren Trommel (2) und dem Laufrad (3) sich ferner in eine entgegengesetzte Richtung dreht, jede Rotationszykluszeit der inneren Trommel (2) gleich der des Laufrads (3) ist und die eingestellte Zeit der Verzögerung kürzer als die Rotationszykluszeit ist.

2. Waschverfahren einer Waschmaschine nach Anspruch 1, wobei das Laufrad (3) und die innere Trommel (2) sich asynchron umkehren und ein Zeitunterschied einer Umkehr größer als 0 und kleiner als 5s ist.

3. Waschverfahren einer Waschmaschine nach Anspruch 1, wobei die Antriebsvorrichtung die innere Trommel (2) oder das Laufrad (3) dazu antreibt, eine Umkehr zu verzögern oder vorzuziehen, und eine eingestellte Zeit zum Verzögern oder Vorziehen der Umkehr größer als 0 und kleiner als 5s ist.

4. Waschverfahren einer Waschmaschine nach Anspruch 2 oder 3, wobei innerhalb jedes Rotationszyklus eine Zeit einer Umkehr der inneren Trommel (2) oder des Laufrads (3), im Vergleich zu einer Zeit einer Umkehr des Laufrads (3) oder der inneren Trommel (2), um 0,05 bis 3s verzögert oder vorgezogen ist.

5. Waschverfahren einer Waschmaschine nach Anspruch 1, wobei bei einem Waschvorgang ein Drehzahlverhältnis zwischen der inneren Trommel (2) und dem Laufrad (3) 1:(1 bis 5) ist; und eine Drehzahl des Laufrads (3) 40 bis 150 Umdrehungen pro Minute beträgt.

6. Waschverfahren einer Waschmaschine nach Anspruch 1, wobei eine Zeit, in der die Antriebsvorrichtung die innere Trommel (2) und das Laufrad (3) dazu antreibt, sich innerhalb jedes Rotationszyklus einander entgegengesetzt zu drehen, 1 bis 5s beträgt.

7. Waschverfahren einer Waschmaschine nach Anspruch 1 oder 6, wobei Geschwindigkeiten der inneren Trommel (2) und des Laufrads (3), die sich in eine gleiche Richtung drehen, anders sind als Geschwindigkeiten der inneren Trommel (2) und des Laufrads (3), die sich einander entgegengesetzt drehen.

8. Waschverfahren einer Waschmaschine nach Anspruch 1, wobei eine Drehzahl der inneren Trommel (2) und/oder des Laufrads (3) bei jedem Waschvorgang veränderbar ist und eine Drehzahl entsprechend einer eingestellten Veränderungsregel erhöht oder verringert wird.

9. Waschverfahren einer Waschmaschine, wobei die Waschmaschine eine äußere Trommel (1), eine innere Trommel (2), ein Laufrad (3) und eine Antriebsvorrichtung umfasst, bei einem Waschvorgang eine Antriebsvorrichtung die innere Trommel (2) und das Laufrad (3) dazu antreibt, sich einander entgegengesetzt zu drehen, und die innere Trommel (2) und das Laufrad (3) sich nach jedem Rotationszyklus umgekehrt drehen, wobei dieser Rotationszyklus eine Zykluszeit ist, in der die innere Trommel (2) und das Laufrad (3) sich einander entgegengesetzt drehen,
**dadurch gekennzeichnet, dass**
die Antriebsvorrichtung die innere Trommel (2) und das Laufrad (3) dazu antreibt, sich asynchron umzukehren, um zu ermöglichen, dass innerhalb einer Umkehrzeitdifferenz eines aus dem Laufrad (3) und der inneren Trommel (2) sich dreht und das andere stillsteht; und **dadurch gekennzeichnet, dass**:
wenn das Waschen anfängt, das Laufrad (3) und die innere Trommel (2) sich einander entgegengesetzt drehen und eine verzögerte Anfangszeit zwischen dem Laufrad (3) und der inneren Trommel (2) größer als 0 und kleiner oder gleich 3s ist;
wobei eines aus dem Laufrad (3) und der inneren Trommel (2) sich zuerst dreht, nach einer Verzögerung einer eingestellten Zeit das andere aus der inneren Trommel (2) und dem Laufrad (3) sich ferner in eine entgegengesetzte Richtung dreht, jede Rotationszykluszeit der inneren Trommel (2) gleich der des Laufrads (3) ist und die eingestellte Zeit der Verzögerung kürzer als die Rotationszykluszeit ist.

10. Waschverfahren einer Waschmaschine nach Anspruch 9, wobei, wenn jeder Rotationszyklus endet, die Antriebsvorrichtung die innere Trommel (2) dazu antreibt aufzuhören, sich zu drehen, das Laufrad (3) dazu, sich umgekehrt zu drehen, und die innere Trommel (2) dazu, sich nach einer eingestellten Zeit ferner umgekehrt zu drehen, und die eingestellte Zeit größer als 0 und kleiner als 5s ist.

11. Waschverfahren einer Waschmaschine nach Anspruch 9, wobei, wenn jeder Rotationszyklus in Kürze endet, die Antriebsvorrichtung die innere Trommel (2) dazu antreibt aufzuhören, sich zu drehen, das Laufrad (3) dazu, sich weiterhin zu drehen, und die innere Trommel (2) und das Laufrad (3) dazu, sich nach einer eingestellten Zeit ferner umgekehrt zu drehen, und die eingestellte Zeit größer als 0 und kleiner als 5s ist.

12. Waschverfahren einer Waschmaschine nach Anspruch 9, wobei eine Drehzahl des Laufrads (3), wenn die innere Trommel stillsteht, anders ist als eine Drehzahl des Laufrads (3), wenn die innere Trommel (2) und das Laufrad (3) sich in unterschiedliche Richtungen drehen.

## Revendications

1. Procédé de lavage d'une machine à laver, où la machine à laver comprend un tambour extérieur (1), un tambour intérieur (2), un rotor (3) et un dispositif d'entraînement, un dispositif d'entraînement entraînant le tambour intérieur (2) et le rotor (3) dans des sens de rotation opposés pendant un processus de lavage, et le tambour intérieur (2) et le rotor (3) tournant en sens inverse après chaque cycle de rotation, un cycle de rotation étant un temps de cycle pendant lequel le tambour intérieur (2) et le rotor (3) tournent dans des sens de rotation opposés,
**caractérisé en ce que** le dispositif
d'entraînement entraîne une inversion asynchrone du tambour intérieur (2) et du rotor (3), de manière à permettre au rotor (3) et au tambour intérieur (2) de tourner dans le même sens pendant une différence entre temps d'inversion ; et **caractérisé en ce**
**qu'**au démarrage du lavage, le rotor (3) et le tambour intérieur (2) tournent dans des sens opposés, et un temps de démarrage retardé entre le rotor (3) et le tambour intérieur (2) est supérieur à 0 et inférieur ou égal à 3 S ;
soit le rotor (3) soit le tambour intérieur (2) tournant en premier, après décalage d'un temps défini, le tambour intérieur (2) ou le rotor (3) tournant alors dans un sens opposé, chaque temps de cycle de rotation du tambour intérieur (2) étant égal à celui du rotor (3), et le temps de décalage défini étant inférieur au temps de cycle de rotation.

2. Procédé de lavage d'une machine à laver selon la revendication 1,
où le rotor (3) et le tambour intérieur (2) sont inversés de manière asynchrone, et une différence de temps d'inversion est supérieure à 0 et inférieure à 5 S.

3. Procédé de lavage d'une machine à laver selon la revendication 1, où le dispositif d'entraînement entraîne le tambour intérieur (2) ou le rotor (3) de manière à retarder ou à avancer une inversion, et où un temps de retard ou d'avance d'inversion défini est supérieur à 0 et inférieur à 5 S.

4. Procédé de lavage d'une machine à laver selon la revendication 2 ou la revendication 3, où pendant chaque cycle de rotation, un temps d'inversion du tambour intérieur (2) ou du rotor (3) est retardé ou avancé de 0,05 à 3 S comparativement à un temps d'inversion du rotor (3) ou du tambour intérieur (2).

5. Procédé de lavage d'une machine à laver selon la revendication 1, où lors d'un processus de lavage, un rapport de vitesses de rotation entre le tambour intérieur (2) et le rotor (3) est de 1:(1 à 5) ; et la vitesse de rotation du rotor (3) est de 40 à 150 tours par minute.

6. Procédé de lavage d'une machine à laver selon la revendication 1, où le temps où le dispositif d'entraînement entraîne le tambour intérieur (2) et le rotor (3) en rotation dans des sens opposés pendant chaque cycle de rotation est compris entre 1 et 5 S.

7. Procédé de lavage d'une machine à laver selon la revendication 1 ou la revendication 6, où les vitesses du tambour intérieur (2) et du rotor (3) tournant dans le même sens sont différentes des vitesses du tambour intérieur (2) et du rotor (3) tournant dans des sens opposés.

8. Procédé de lavage d'une machine à laver selon la revendication 1, où la vitesse de rotation du tambour intérieur (2) et/ou du rotor (3) est modifiable lors de chaque processus de lavage, et où la vitesse de rotation est augmentée ou diminuée en fonction d'une règle de variation définie.

9. Procédé de lavage d'une machine à laver, où la machine à laver comprend un tambour extérieur (1), un tambour intérieur (2), un rotor (3) et un dispositif d'entraînement, un dispositif d'entraînement entraînant le tambour intérieur (2) et le rotor (3) dans des sens de rotation opposés pendant un processus de lavage, et le tambour intérieur (2) et le rotor (3) tournant en sens inverse après chaque cycle de rotation, ledit cycle de rotation étant un temps de cycle pendant lequel le tambour intérieur (2) et le rotor (3) tournent dans des sens de rotation opposés,
**caractérisé**
**en ce que** le dispositif d'entraînement entraîne une inversion asynchrone du tambour intérieur (2) et du rotor (3), de manière à permettre soit rotor (3) soit au tambour intérieur (2) de tourner et à l'autre de rester fixe pendant une différence entre temps d'inversion ;
et **caractérisé**
**en ce qu'**au démarrage du lavage, le rotor (3) et le tambour intérieur (2) tournent dans des sens opposés, et un temps de démarrage retardé entre le rotor (3) et le tambour intérieur (2) est supérieur à 0 et inférieur ou égal à 3 S ;
soit le rotor (3) soit le tambour intérieur (2) tournant en premier, après décalage d'un temps défini, le tambour intérieur (2) ou le rotor (3) tournant alors dans un sens opposé, chaque temps de cycle de rotation du tambour intérieur (2) étant égal à celui du rotor (3), et le temps de décalage défini étant inférieur au temps de cycle de rotation.

10. Procédé de lavage d'une machine à laver selon la revendication 9, où à la fin de chaque cycle de rotation, le dispositif d'entraînement entraîne l'arrêt de rotation du tambour intérieur (2), la rotation inversée du rotor (3), et la rotation inversée du tambour intérieur (2) après un temps défini, le temps défini étant supérieur à 0 et inférieur à 5 S.

11. Procédé de lavage d'une machine à laver selon la revendication 9, où, quand chaque cycle de rotation est près de finir, le dispositif d'entraînement entraîne l'arrêt de rotation du tambour intérieur (2), la poursuite de la rotation du rotor (3), et la rotation inversée du tambour intérieur (2) et du rotor (3) après un temps défini, le temps défini étant supérieur à 0 et inférieur à 5 S.

12. Procédé de lavage d'une machine à laver selon la revendication 9, où la vitesse de rotation du rotor (3) quand le tambour intérieur est fixe diffère de la vitesse de rotation du rotor (3) quand le tambour intérieur (2) et le rotor (3) tournent dans des sens contraires.
